# EUROPEAN PATENT APPLICATION

(11) **EP 4 375 405 A1**
(43) Date of publication of application: **29.05.2024**
(21) Application number: 22208832.0
(22) Date of filing: 22.11.2022
(51) Int. Cl.: D01H 13/32, D01G 31/00, G05B 23/02

(54) **DEVICE AND METHOD FOR DETERMINING A CAUSE OF A MALFUNCTION IN A PLURALITY OF TEXTILE MACHINES**

(71) Applicant: Maschinenfabrik Rieter AG, 8406 Winterthur (CH)
(72) Inventor: PATIL, Nitin Tukaram, 8406 Winterhur (CH)

(57) **Abstract**

This disclosure relates to an electronic device (10) for determining a cause (c) of a malfunction (m) in a plurality of textile machines (12, 23, 34, 45, 56, 67) which are configured for processing an input textile material (1) from upstream textile machines (12, 23, 34, 45, 56) to downstream textile machines (23, 34, 45, 56, 67) into intermediate textile materials (2, 3, 4, 5, 6) and an output textile material (7). The electronic device (10) is configured to: receive operating information (11) of the textile machines (12, 23, 34, 45, 56, 67), determine from the operating information (11) the malfunction (m) in the plurality of textile machines (12, 23, 34, 45, 56, 67), determine the cause (c) of the malfunction (m) by searching in a database (db) having stored functional and/or structural information of the plurality of textile machines (12, 23, 34, 45, 56, 67) for the cause (c) of the malfunction (m).

## Description

### Field of invention

This disclosure relates to a device and a method for determining a cause of a malfunction in a plurality of textile machines. More particularly, this disclosure relates to a device and a method for determining a cause of a malfunction in a plurality of textile machines which are configured for processing an input textile material from upstream textile machines to downstream textile machines into intermediate textile materials and an output textile material.

### Description of related art

Spinning mills include a plurality of textile machines which are configured for converting natural and man-made fibers and their blends into yarns of desired quantities and qualities. Spinning mills typically include large numbers of textile machines each possibly including large numbers of parts, subunits, etc. Furthermore, spinning mills typically include large numbers of auxiliary systems such as transport systems, power units, air conditioning systems, etc.

For monitoring operation of a spinning mill, various sensors are arranged at various locations of the spinning mill, in particular at the textile machines and their parts. The sensors are designed for collecting operating information of the textile machines and auxiliary systems of the spinning mill, such as sensors for collecting fiber quality, sliver breaks, sliver jams, a missing pressure in a drafting system, etc. Typically, operating information collected by the sensors is converted into computer readable data and transmitted via computer networks to electronic devices or computer systems. Operating information can be displayed via a user interface such as a touchscreen to operator persons. Depending on the displayed operating information, operator persons can take actions in case operating information indicates a malfunction, such as reinserting slivers, removing sliver congestions, checking pneumatic cylinders for pressure, etc. Operating information informs operator persons about a current state of the spinning mill, and actions related to operating information can improve operation of the spinning mill, for example as regards performance, reliability, etc.

Spinning mills typically include large numbers of textile machines, large numbers of sensors, etc. During operation of the spinning mill, large amounts of operating information is generated. From operating information, operator persons can identify often relatively quickly malfunctions, such as a degraded fiber quality, sliver breaks, sliver jams, etc. However, it is often relatively difficult to determine the cause of a malfunction, especially in case of large numbers of textile machines, because the location of the malfunction and the location for the cause of the malfunction can relate to different textile machines, for example.

CN109844193A, EP3516099A1 disclose a system for predictive maintenance of a textile machine, which comprises a number of sensors. A reference value for each sensor is stored in a data base. During operation, each sensor of the textile machine is read. The signal of each sensor is correlated with the stored reference value. An alert or warning is given, if a single sensor data and a correlated sensor data show an irregularity.

US3789595A discloses a spinning frame having a plurality of spindles with bobbins thereon being wound simultaneously with yarn. A travelling service tender monitors each spindle work station over a trip through all spindle positions to determine and correct malfunctions performed by an automatic service cycle performed at each spindle location work station requiring attention. Thus, full bobbins are detected and doffed, roll wraps are detected and stations disabled, flag down spindles are bypassed, and improper yarn feed is sensed and corrected by the service tender for each station encountered on a trip requiring such service.

### Brief summary of the invention

There may be a need for a device and a method for determining a cause of a malfunction in a plurality of textile machines. In particular, there may be a need for a device and a method for determining a cause of a malfunction in a plurality of textile machines which are configured for processing an input textile material from upstream textile machines to downstream textile machines into intermediate textile materials and an output textile material.

Such a need may be met by the subject-matter of the independent claims. Advantageous embodiments are defined in the dependent claims.

An aspect of the invention relates to an electronic device for determining a cause of a malfunction in a plurality of textile machines which are configured for processing an input textile material from upstream textile machines to downstream textile machines into intermediate textile materials and an output textile material. The electronic device is configured to: receive operating information of the textile machines, determine from the operating information the malfunction in the plurality of textile machines, determine the cause of the malfunction by searching in a database having stored functional and/or structural information of the plurality of textile machines for the cause of the malfunction. For example, textile machines can include a spinning machine. For example, the operating information can relate to a measurement of the thickness of yarn produced by the spinning machine and the malfunction can relate to a periodic variation (e.g. a periodic thickening) of the yarn. For example, the database having stored functional and/or structural information of the textile machines can have stored information that a periodic variation of yarn produced by the spinning machine can have the cause that a supercritical wear of a certain component of an upstream textile machine needs to be checked, for example a belt of an upstream drawframe.

For example, the textile machines can include a ring spinning machine. For example, the operating information can relate to the operating state of spinning positions of a ring spinning machine and the malfunction can relate to a particular group spinning positions which have stopped working, for example a group of four spinning positions which are closely arranged within a section of the spinning machine. For example, the database having stored functional and/or structural information of the textile machines can have stored information about a single belt in the ring spinning machine which drives the group of four spinning positions which have stopped working and the belt can be determined as the cause of the malfunction.

For example, the textile machines can include a drawframe. For example, the operating information can related to a wavelength spectrogram which is measured within a drawframe, for example of a textile material, and the malfunction can relate to a peak in the wavelength spectrogram, for example a peak at 10 cm. For example, the database having stored functional and/or structural information of the textile machines can have stored information that a particular belt of the drawframe needs to be checked in case of a peak at 10 cm in the wavelength spectrogram.

Thus, contrary to the prior art, the cause of a malfunction in a plurality of textile machines can be determined.

In some embodiments, operating information includes one or more of at least one quality feature of the input textile material, intermediate textile materials, and/or the output textile material, at least one operating parameter of at least one textile machine, and failure information of at least one part of at least one textile machine. A quality feature of a textile material can relate to a mass, a thickness, a hairiness, a number of filaments, etc. An operating parameter can relate to a rotation speed, a power consumption, etc. Failure information can relate to a failure of spinning positions, a sliver break, etc.

In some embodiments, determining the malfunction includes one or more of comparing at least one quality feature of the input textile material, intermediate textile materials, and/or the output textile material with at least one nominal quality feature, and comparing at least one operating parameter of at least one textile machine with at least one nominal operating parameter. A nominal quality feature can relate to a nominal mass, a nominal thickness, a nominal periodic variation (e.g. a periodic thickening), a nominal hairiness, a nominal number of filaments. A nominal operating parameter can relate to a nominal rotation speed, a nominal power consumption, etc.

In some embodiments, the database having stored functional and/or structural information of the plurality of textile machines includes one or more of information of transport systems for transporting the input textile material, intermediate textile materials, and/or the output textile material from an upstream textile machine to a downstream textile machine, information of parts and/or group of parts of textile machines, information of auxiliary systems, and information of maintenance plans. Information of transport systems can relate to a path, a time, a temperature, a humidity, etc. related to transportation of textile material from an upstream textile machine to a downstream textile machine. Information of parts and/or group of parts of textile machines can relate to a number of processing positions, an actuator such as a belt for operating a processing position or a group of processing positions, etc. Information of auxiliary systems can relate to operating parameters of air conditioning systems, ventilation systems, electrical power supply systems, etc. Information of maintenance plans can relate to a time since a last maintenance of a textile machine, a time until next maintenance of a textile machine, etc. For example, in case of two possible causes, recent maintenance of a part related to one of the causes can indicate that this cause is less likely.

In some embodiments, the database having stored functional and/or structural information of the textile machines enables determining the cause of the malfunction at a textile machine located upstream from the textile machine having the malfunction. For example, a periodic variation (e.g. a periodic thickening) of the textile material at a downstream textile machine can be caused by a supercritical wear of a certain component of an upstream textile machine.

In some embodiments, the database having stored functional and/or structural information of the textile machines enables determining the cause of the malfunction at a textile machine having the malfunction. For example, the failure of a certain number of spinning positions which are arranged in a certain way to each other can be caused by the failure of a certain common drive part.

In some embodiments, the database having stored functional and/or structural information of the textile machines includes information of auxiliary systems for enabling determining the cause of the malfunction at an auxiliary system.

In some embodiments, the cause of the malfunction relates to one or more parts of one or more textile machines.

In some embodiments, the electronic device is further configured to transmit information related to the cause of the malfunction to an automatic repair system, to a central management system and/or to a user device. The central management system can relate to a computer system such as a desktop computer. The user device can relate to a portable computer system such as a smartphone or another wearable.

In some embodiments, the electronic device is further configured to receive from an automatic repair system, from a central management system and/or from a user device information related to a correction of the cause of the malfunction, and optionally to update the database having stored functional and/or structural information of the plurality of textile machines. For example, in case information related to a correction of the cause of the malfunction is not received within a predetermined time span, the electronic device can repeat transmitting information related to the cause of the malfunction.

For example, after receipt of information related to a correction of the cause of the malfunction, the electronic device can update maintenance information such as date/time of replacement of a certain drive part.

In some embodiments, the electronic device is further configured to transmit information related to the cause of the malfunction to one or more textile machines for changing a configuration of one or more textile machines. For example, changing a configuration of a textile machine can relate to an adaption of an operating speed, a shutdown, etc.

The invention further relates to a method for determining a cause of a malfunction in a plurality of textile machines which are configured for processing an input textile material from upstream textile machines to downstream textile machines into intermediate textile materials and an output textile material. The method includes the steps executed by an electronic device or a computer system of: receiving operating information of the textile machines, determining from the operating information the malfunction in the plurality of textile machines, determining the cause of the malfunction by searching in a database having stored functional and/or structural information of the plurality of textile machines for the cause of the malfunction.

In some embodiments, operating information includes one or more of at least one quality feature of the input textile material, intermediate textile materials, and/or the output textile material, at least one operating parameter of at least one textile machine, and failure information of at least one part of at least one textile machine.

In some embodiments, determining the malfunction includes one or more of comparing at least one quality feature of the input textile material, intermediate textile materials, and/or the output textile material with at least one nominal quality feature, and comparing at least one operating parameter of at least one textile machine with at least one nominal operating parameter.

In some embodiments, the database having stored functional and/or structural information of the plurality of textile machines includes one or more of information of transport systems for transporting the input textile material, intermediate textile materials, and/or the output textile material from an upstream textile machine to a downstream textile machine, information of parts and/or group of parts of textile machines, information of auxiliary systems, and information of maintenance plans.

### Brief description of drawings

The invention will be better understood with the aid of the description of an embodiment given by way of example an illustrated by the figures, in which:
Fig. 1 illustrates schematically a plurality of textile machines and an electronic device according to the present invention; and
Fig. 2 illustrates schematically possible method steps of a method according to the present invention.

### Detailed Description of the invention

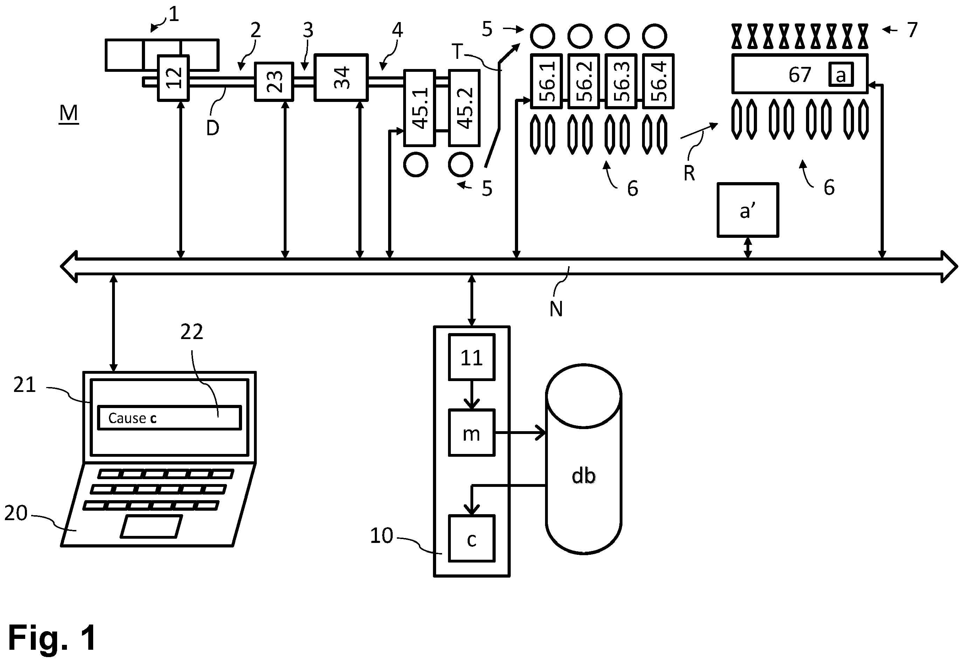

Fig. 1 illustrates schematically a plurality of textile machines 12, 23, 34, 45, 56, 67. For example, the textile machines 12, 23, 34, 45, 56, 67 are arranged in a spinning mill M, which includes several parts, namely machinery such as textile machines, industrial control systems such as computer systems and computer networks, auxiliary systems such as transport systems, etc., which are designed for building up the spinning mill M, and which are in particular configured for converting natural and man-made fibers and their blends into desired yarns.

The textile machines 12, 23, 34, 45, 56, 67 are configured for processing an input textile material 1, such as raw cotton or any other natural or manmade type of fiber or blend of such fibers, into intermediate textile materials 2, 3, 4, 5, 6 and an output textile material 7, such as yarn arranged on cones. Depending on a given quantity and/or quality of the input textile material 1 and/or a desired quantity and/or quality of the output textile material 7, different types of textile machines 12, 23, 34, 45, 56, 67 and/or different sequences of textile machines 12, 23, 34, 45, 56, 67 can be involved for processing the input textile material 1 into the output textile material 7.

The textile machines 12, 23, 34 45, 56, 67 can include one or more blow room textile machines for processing raw cotton into chute matt, one or more carding textile machines for processing chute matt into carded sliver, one or more breaker draw frame textile machines for processing carded sliver into break drawn sliver, one or more finisher draw frame textile machines for processing break drawn sliver into finisher draw sliver, one or more speed frame textile machines for processing finisher draw sliver into roving, one or more ring frame textile machines for processing roving into ring cops, one or more winding textile machines for processing ring cops into yarn cones, etc.

In some embodiments, the textile machines 12, 23, 34, 45, 56, 67 can relate to a spinning mill M and a downstream weaving mill, knitting mill, etc. For example, a first set of textile machines 12, 23, 34, 45 can form the spinning mill, and a second set of textile machines 56, 67 can form the downstream weaving mill, knitting mill, etc.

At certain stages, a plurality of textile machines can be arranged in parallel, for example for providing enough capacity, for providing replacement textile machines in case of a failure of a running textile machine, etc. Fig. 1 illustrates schematically two textile machines 45.1, 45.2 for processing intermediate textile material 4 into intermediate textile material 5, and four textile machines 56.1, 56.2, 56.3, 56.4 for processing intermediate textile material 5 into intermediate textile material 6. Furthermore, textile machines may include subunits of identical or similar design, such as essentially identically designed spinning units, winding units, etc.

Auxiliary systems can include duct systems D, trolley systems T, rail systems R, other types of conveyors, etc. for transporting textile material from one textile machine to another textile machine. Auxiliary systems can include power stations, air conditioning systems, etc.

Automatic repair systems a, a' can be configured for automatically repairing a cause of a malfunction. For example, Fig. 1 illustrates schematically an automatic repair system a which is arranged at textile machine 67 and therefore responsible for repairing a cause of a malfunction at textile machine 67, and an automatic repair system a' which is arranged between textile machines 56.1, 56.2, 56.3, 56.4 and textile machine 67 and responsible for repairing a cause of a malfunction at textile machines 56.1, 56.2, 56.3, 56.4 and textile machine 67.

Fig. 1 illustrates an exemplary configuration of textile machines 12, 23, 34 45, 56, 67, auxiliary systems, automatic repair systems a, a', etc. The present invention is not limited to a particular configuration of textile machines 12, 23, 34 45, 56, 67, auxiliary systems, automatic repair systems, etc. The present invention is applicable for any configuration of textile machines 12, 23, 34 45, 56, 67, auxiliary systems, automatic repair systems, etc.

The spinning mill M can include a large number of textile machines, systems, parts, subunits, elements, etc. for processing the input textile material 1 into the desired output textile material 7.

As illustrated in Fig. 1, the textile machines 12, 23, 34, 45, 56, 67, etc., are connected to a computer network N. Furthermore, an electronic device 10 and an operator device 20 are connected to the computer network N. For connection with the computer network N, the textile machines 12, 23, 34, 45, 56, 67, etc., the electronic device 10, the operator device 20, etc. include respective network interfaces. The electronic device 10 and/or the operator device 20 are configured for monitoring and/or controlling via the computer network N operation of the textile machines 12, 23, 34, 45, 56, 67, their subunits, parts, elements, if applicable, etc. The computer network N can conform with an IEEE 802 standard and can include wired and/or wireless networks. In some embodiments, analog and/or digital signal transmission devices (electrical, optical, etc.) can be arranged for providing connections between the textile machines 12, 23, 34, 45, 56, 67, etc., and the electronic device 10 and/or the operator device 20. Auxiliary systems such as duct systems D, trolley systems T, railway systems R, power stations, air conditioning systems, etc. can be connected with the computer network N. Automatic repair systems a, a' can be connected with the computer network N. The electronic device 10 and/or the operator device 20 can be configured for monitoring and/or controlling auxiliary devices, automatic repair systems a, a', etc.

Thus, textile machines 12, 23, 34, 45, 56, 67, auxiliary systems, subunits, parts, elements, etc. of the spinning mill M can be monitored and controlled by the control device 10 and/or the operator device 20.

The control device 10 and the operator device 20 can have the form of a single device.

A plurality of control devices and/or operator devices can be arranged for monitoring and/or controlling operation of the spinning mill M, for example in the form of a distributed computer system.

The control device 10 can be configured to monitor and/or to control the spinning mill M automatically or semi-automatically, for example for executing a predefined production task or plan for converting an input textile material 1 into a desired output textile material 7. The operator device 20 can be configured to enable an operator person to monitor and control operation of the spinning mill M, for example for monitoring and/or controlling operating parameters of parts of the spinning mill M, such as of the textile machines 12, 23, 34, 45, 56, 67, etc. Operating parameters may relate to rotation speeds, throughput, quality, quantity, etc.

The control device 10 and the operator device 20 as will be described below according to the present invention can take the form of a computer, for example a computer that is generally used in one place (such as a conventional desktop computer, workstation, server, etc.) or a computer that is generally portable (such as a laptop, notebook, tablet, handheld computer, etc.). Such a computer can include a machine-readable medium having stored thereon instructions for programing one or more processors to perform some or all of the operations and functions described in this disclosure. A machine-readable medium can include any mechanism for storing or transmitting information in a form readable by a machine (e.g., a computer), such as Hard Disk drives (HD), Solid State Disk drives (SSD), Compact Disc Read-Only Memory (CD-ROMs), Read-Only Memory (ROMs), Random Access Memory (RAM), Erasable Programmable Read-Only Memory (EPROM), etc. In other embodiments, some or all of these operations and functions can be performed by specific hardware components that contain hardwired logic. Those operations and functions can alternatively be performed by any combination of programmable computer components and fixed hardware circuit components. In some embodiments, the machine-readable medium includes instructions stored thereon, which, when executed by one or more processors of a computer, cause the computer to perform the methods and functions as described in this disclosure.

The electronic device 10 is configured to receive operating information of the textile machines 12, 23, 34, 45, 56, 67. The electronic device 10 is configured to receive via the computer network N operating information 11 of the textile machines 12, 23, 34, 45, 56, 67, of auxiliary systems, etc. For example, the operating information can relate to one or more quality features of the input textile material 1, intermediate textile materials 2, 3, 4, 5, 6, and/or the output textile material 7. For example, the operating information can relate to a periodic variation (e.g. a periodic thickening) of a yarn. For example, the operating information can relate to a wavelength spectrogram. For example, the operating information can relate to one or more operating parameters of the textile machines 12, 23, 34, 45, 56, 67. For example, the operating information can relate to failure information of one or more parts of the textile machines 12, 23, 34, 45, 56, 67. For example, the operating information can relate to a group of spinning positions which have stopped working.

The electronic device 10 is configured to determine from the operating information 11 the malfunction in the textile machines 12, 23, 34, 45, 56, 67. For example, determining the malfunction can include comparing one or more quality features of the input textile material 1, intermediate textile materials 2, 3, 4, 5, 6, and/or the output textile material 7 with one or more nominal quality features. For example, determining the malfunction can include comparing one or more operating parameters of the textile machines 12, 23, 34, 45, 56, 67 with one or more nominal operating parameters.

The electronic device 10 is configured to determine the cause c of the malfunction m by searching in a database db having stored functional and/or structural information of the plurality of textile machines 12, 23, 34, 45, 56, 67 for the cause c of the malfunction m. For example, the database db having stored functional and/or structural information of the plurality of textile machines 12, 23, 34, 45, 56, 67 can include information of transport systems for transporting the input textile material 1, intermediate textile materials 2, 3, 4, 5, 6, and/or the output textile material 7 from an upstream textile machine 12, 23, 34, 45, 56, 67 to a downstream textile machine 12, 23, 34, 45, 56, 67. For example, if the malfunction m concerns a periodic variation (e.g. a periodic thickening) of the yarn, the database db can includes information that the cause c of the malfunction m is a supercritical wear of a certain component of an upstream processing point. For example, the database db having stored functional and/or structural information of the plurality of textile machines 12, 23, 34, 45, 56, 67 can include information of parts and/or group of parts of textile machines 12, 23, 34, 45, 56, 67. For example, if the malfunction m concerns the failure of a certain number of spinning positions, the database db can include information that the spinning positions are arranged in a certain way to each other and that the cause c of the malfunction is the failure of a certain common drive part. This can be the case, for example, if a certain number of work stations (e.g. a certain number of spindles of a ring spinning machine) operating in parallel are driven by one common drive. For example, two adjacent work stations can be driven by a common electric motor. For example, four work stations (e.g. spindles of a ring spinning machine) can be driven by a common belt. For example, if the malfunction m concerns a wavelength peak at a certain distance, the database db can include information that the cause c of the malfunction m is a particular drive belt. For example, periodically repeating thick or thin spots in a longitudinal direction of a produced standard fiber composite (e.g. roving, yarn, etc.) can be assigned to a part of an upstream drafting system with a suitable periodicity. For example, a contaminated or heavily worn cot of a drafting system can be identified as the cause of the fault. This can be identified only on the basis of the operating parameters (e.g. rotation speed, etc.) of the drafting system and the nominal geometries of the cots of the drafting system, which are known to the electronic device via the database db. For example, the database db having stored functional and/or structural information of the plurality of textile machines 12, 23, 34, 45, 56, 67 can include information of auxiliary systems, such as air conditioning systems, ventilation systems, power supply systems, conveyor systems, etc. For example, the database db having stored functional and/or structural information of the plurality of textile machines 12, 23, 34, 45, 56, 67 can include information of maintenance plans. For example, information of maintenance plans can relate to a time of a last or next lubrication of bearings, to a time or type of last or next grinding of preparation cots of a drafting system (such as cots of a drafting system of a ring spinning machine), etc.

The database db having stored functional and/or structural information can be stored in a memory of the electronic device, in a database server, in a cloud, etc. The database db can relate to a data warehouse, a distributed database, a federated database system, a hypertext or hypermedia database, a knowledge base, an operational database, etc.

Operating information 11 can include a quality feature of textile materials processed by the textile machines 12, 23, 34, 45, 56, 67, such as a thickness, a mass, a hairiness, etc. Operating information 11 can include an operating parameter of a textile machine 12, 23, 34, 45, 56, 67, such as a rotation speed, a power consumption, etc. Operating information 11 can include failure information related to a textile machine 12, 23, 34, 45, 56, 67, such as spindle of a ring spinning machine having stopped working, etc.

Determining the malfunction m can include comparing a quality feature of a textile material with a nominal quality feature, such as a current periodic variation (e.g. a periodic thickening) with a maximal periodic thickening. Determining the malfunction m can include comparing an operating parameter of a textile machine 12, 23, 34, 45, 56, 67 with a nominal operating parameter, such as current rotation speed with a nominal rotation speed.

The database db having stored functional and/or structural information of the textile machines 12, 23, 34, 45, 56, 67 can include information of transport systems for transporting textile material from an upstream textile machine to a downstream textile machine, such as a transport system for transporting textile material from an upstream draw frame textile machine to a downstream ring spinning machine. The database db can include information of a plurality of upstream and downstream textile machines 12, 23, 34, 45, 56, 67 and of a plurality of transport systems arranged between the upstream and downstream textile machines 12, 23, 34, 45, 56, 67, thereby enabling determining from which upstream textile machine a downstream textile machine receives textile material.

The database db having stored functional and/or structural information of the textile machines 12, 23, 34, 45, 56, 67 can include information for enabling determining the cause c of the malfunction m at an upstream textile machine 12, 23, 34, 45, 56, 67, for example a characteristic periodic variation (e.g. a characteristic periodic thickening) at a downstream ring spinning machine can be caused by a wear of a drive belt of an upstream draw frame machine.

The database db having stored functional and/or structural information of the textile machines 12, 23, 34, 45, 56, 67 can include information for enabling determining the cause c of the malfunction m at the textile machine 12, 23, 34, 45, 56, 67, for example interrupting of operation of a group of spindles of a ring spinning machine can be caused by a failure of a common drive belt.

The database db having stored functional and/or structural information of the textile machines 12, 23, 34, 45, 56, 67 can include information of auxiliary systems for determining the cause c of the malfunction m at an auxiliary system. For example, certain inacceptable quality features of produced textile material can be caused by a wrongly adjusted ventilation system.

As illustrated in Fig. 1, the electronic device 10 can be configured to transmit the cause c of the malfunction m to the operator device 20 for displaying the cause c. Accordingly, operator persons receive information about the state of the textile machines 12, 23, 34, 45, 56, 67, and can take respective action, if applicable.

As illustrated in Fig. 1, automatic repair systems a, a' can be arranged. For example, repair system a can relate to a repair robot arranged at a ring spinning machine for repairing certain parts of the ring spinning machine. For example, repair system a' can relate to a repair robot arranged beside the textile machines 12, 23, 34, 45, 56, 67 for repairing certain parts of the textile machines 12, 23, 34, 45, 56, 67. The electronic device 10 can be configured to transmit the cause c of the malfunction to an automatic repair systems a, a'. The automatic repair systems a, a' can be configured to repair the cause c of the malfunction m.

The electronic device 10 can be configured to receive from an automatic repair system a, a' and/or from a user device 20 information related to a correction of the cause c of the malfunction. For example, after replace of a drive belt, respective information can be transmitted to the electronic device. The electronic device 10 can be configured to update the database db, for example, after replacement of a drive belt, the electronic device 10 can update respective information in the database db, such as date, time, belt type, etc.

The electronic device 10 can have the form of a computer and/or can have the form of a hardwired logic circuit, as described above. The electronic device 10 can be arranged in the form of a subunit of a management system (not illustrated). For example, the subunit can have the form of respective program instructions stored in a memory, wherein the program instructions enable a processor to provide operations and functions of the electronic device 10 as described in the present disclosure. Alternatively (not illustrated), the electronic device 10 can be arranged in a similar manner as a subunit of the operator device 20. Alternatively (not illustrated), the control device 10 and the operator device 10 form a single device.

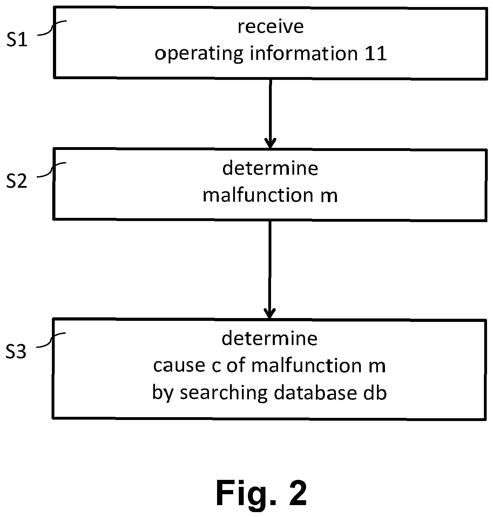

Fig. 2 illustrates schematically possible method steps of a method for determining the cause c of a malfunction m in a plurality of textile machines 12, 23, 34, 45, 56, 67 which are configured for processing an input textile material 1 from upstream textile machines 12, 23, 34, 45, 56 to downstream textile machines 23, 34, 45, 56, 67 into intermediate textile materials 2, 3, 4, 5, 6 and an output textile material 7. The method includes the step S1 of receiving operating information 11 of the textile machines 12, 23, 34, 45, 56, 67. The method includes the step S2 of determining S2 from the operating information 11 the malfunction m in the plurality of textile machines 12, 23, 34, 45, 56, 67. The method includes the step S3 of determining S3 the cause c of the malfunction m by searching in a database db having stored functional and/or structural information of the plurality of textile machines 12, 23, 34, 45, 56, 67 for the cause c of the malfunction m.

### Reference numerals/signs

- 12,23,34,45,56,67: textile machines
- 1,2,3,4,5,6,7: textile materials
- M: spinning mill
- N: computer network
- D: duct system
- T: trolley system
- R: rail system
- 10: electronic device
- 11: operating information
- m: malfunction
- db: database having stored functional and/or structural information
- c: cause of malfunction
- 20: operator device
- 21: display
- 22: user interface element for displaying cause

## Claims

1. An electronic device (10) for determining a cause (c) of a malfunction (m) in a plurality of textile machines (12, 23, 34, 45, 56, 67) which are configured for processing an input textile material (1) from upstream textile machines (12, 23, 34, 45, 56) to downstream textile machines (23, 34, 45, 56, 67) into intermediate textile materials (2, 3, 4, 5, 6) and an output textile material (7), the electronic device (10) being configured to:
receive operating information (11) of the textile machines (12, 23, 34, 45, 56, 67),
determine from the operating information (11) the malfunction (m) in the plurality of textile machines (12, 23, 34, 45, 56, 67),
determine the cause (c) of the malfunction (m) by searching in a database (db) having stored functional and/or structural information of the plurality of textile machines (12, 23, 34, 45, 56, 67) for the cause (c) of the malfunction (m).

2. The electronic device (10) according to claim 1, wherein operating information (11) includes one or more of at least one quality feature of the input textile material (1), intermediate textile materials (2, 3, 4, 5, 6), and/or the output textile material (7), at least one operating parameter of at least one textile machine (12, 23, 34, 45, 56, 67), and failure information of at least one part of at least one textile machine (12, 23, 34, 45, 56, 67).

3. The electronic device (10) according to claim 1 or 2, wherein determining the malfunction (m) includes one or more of comparing at least one quality feature of the input textile material (1), intermediate textile materials (2, 3, 4, 5, 6), and/or the output textile material (7) with at least one nominal quality feature, and comparing at least one operating parameter of at least one textile machine (12, 23, 34, 45, 56, 67) with at least one nominal operating parameter.

4. The electronic device (10) according to one of claims 1 to 3, wherein the database (db) having stored functional and/or structural information of the plurality of textile machines (12, 23, 34, 45, 56, 67) includes one or more of information of transport systems for transporting the input textile material (1), intermediate textile materials (2, 3, 4, 5, 6), and/or the output textile material (7) from an upstream textile machine (12, 23, 34, 45, 56, 67) to a downstream textile machine (12, 23, 34, 45, 56, 67), information of parts and/or group of parts of textile machines (12, 23, 34, 45, 56, 67), information of auxiliary systems, and information of maintenance plans.

5. The electronic device (10) according to one of claims 1 to 4, wherein the database (db) having stored functional and/or structural information of the textile machines (12, 23, 34, 45, 56, 67) enables determining the cause (c) of the malfunction (m) at a textile machine (12, 23, 34, 45, 56, 67) located upstream from the textile machine (12, 23, 34, 45, 56, 67) having the malfunction (m).

6. The electronic device (10) according to one of claims 1 to 5, wherein the database (db) having stored functional and/or structural information of the textile machines (12, 23, 34, 45, 56, 67) enables determining the cause (c) of the malfunction (m) at a textile machine (12, 23, 34, 45, 56, 67) having the malfunction (m).

7. The electronic device (10) according to one of claims 1 to 6, wherein the database (db) having stored functional and/or structural information of the textile machines (12, 23, 34, 45, 56, 67) includes information of auxiliary systems for enabling determining the cause (c) of the malfunction (m) at an auxiliary system.

8. The electronic device (10) according to one of claims 1 to 7, wherein the cause (c) of the malfunction (m) relates to one or more parts of one or more textile machines (12, 23, 34, 45, 56, 67).

9. The electronic device (10) according to one of claims 1 to 8, further configured to transmit information related to the cause (c) of the malfunction (m) to an automatic repair system (a, a'), to a central management system and/or to a user device (20).

10. The electronic device (10) according to one of claims 1 to 9, further configured to receive from an automatic repair system (a, a') and/or from a user device (20) information related to a correction of the cause (c) of the malfunction (m), and optionally to update the database (db) having stored functional and/or structural information of the plurality of textile machines (12, 23, 34, 45, 56, 67).

11. The electronic device (10) according to one of claims 1 to 10, further configured to transmit information related to the cause (c) of the malfunction (m) to one or more textile machines (12, 23, 34, 45, 56, 67) for changing a configuration of one or more textile machines (12, 23, 34, 45, 56, 67).

12. A method for determining a cause (c) of a malfunction (m) in a plurality of textile machines (12, 23, 34, 45, 56, 67) which are configured for processing an input textile material (1) from upstream textile machines (12, 23, 34, 45, 56) to downstream textile machines (23, 34, 45, 56, 67) into intermediate textile materials (2, 3, 4, 5, 6) and an output textile material (7), wherein the method includes the steps executed by an electronic device (10) or a computer system of:
receiving (S1) operating information (11) of the textile machines (12, 23, 34, 45, 56, 67),
determining (S2) from the operating information (11) the malfunction (m) in the plurality of textile machines (12, 23, 34, 45, 56, 67),
determining (S3) the cause (c) of the malfunction (m) by searching in a database (db) having stored functional and/or structural information of the plurality of textile machines (12, 23, 34, 45, 56, 67) for the cause (c) of the malfunction (m).

13. The method according to claim 12, wherein operating information (11) includes one or more of at least one quality feature of the input textile material (1), intermediate textile materials (2, 3, 4, 5, 6), and/or the output textile material (7), at least one operating parameter of at least one textile machine (12, 23, 34, 45, 56, 67), and failure information of at least one part of at least one textile machine (12, 23, 34, 45, 56, 67).

14. The method according to claim 12 or 13, wherein determining the malfunction (m) includes one or more of comparing at least one quality feature of the input textile material (1), intermediate textile materials (2, 3, 4, 5, 6), and/or the output textile material (7) with at least one nominal quality feature, and comparing at least one operating parameter of at least one textile machine (12, 23, 34, 45, 56, 67) with at least one nominal operating parameter.

15. The method according to one of claims 12 to 14, wherein the database (db) having stored functional and/or structural information of the plurality of textile machines (12, 23, 34, 45, 56, 67) includes one or more of information of transport systems for transporting the input textile material (1), intermediate textile materials (2, 3, 4, 5, 6), and/or the output textile material (7) from an upstream textile machine (12, 23, 34, 45, 56, 67) to a downstream textile machine (12, 23, 34, 45, 56, 67), information of parts and/or group of parts of textile machines (12, 23, 34, 45, 56, 67), information of auxiliary systems, and information of maintenance plans.
